# EUROPÄISCHE PATENTANMELDUNG

(11) **EP 1 013 719 A1**
(43) Veröffentlichungstag der Anmeldung: **28.06.2000**
(21) Anmeldenummer: 98124535.0
(22) Anmeldetag: 22.12.1998
(51) Int. Cl.: C09B 67/22, D06P 1/39, D06P 3/16, D06P 3/24

(54) **Verfahren zum Trichromie-Färben oder Bedrucken**

(71) Anmelder: Ciba Specialty Chemicals Holding Inc., 4057 Basel (CH)
(72) Erfinder: Adam, Jean-Marie, 68300 Rosenau (FR); Sutter, Peter, 4132 Muttenz (CH); Casi, Francine, 68440 Eschentzwiller (FR)

(57) **Zusammenfassung**

Verfahren zum Trichromie-Färben oder -Bedrucken von natürlichem oder synthetischem Polyamidfasermaterial, dadurch gekennzeichnet, dass man mindestens einen gelb- oder orangefärbenden Farbstoff der Formel (1) 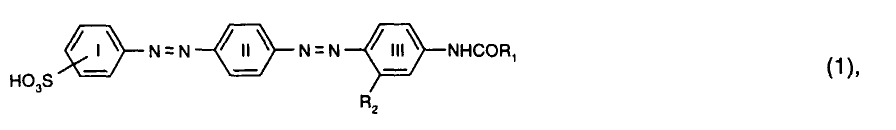 zusammen mit mindestens einem rotfärbenden Farbstoff der Formeln (2) und (3) 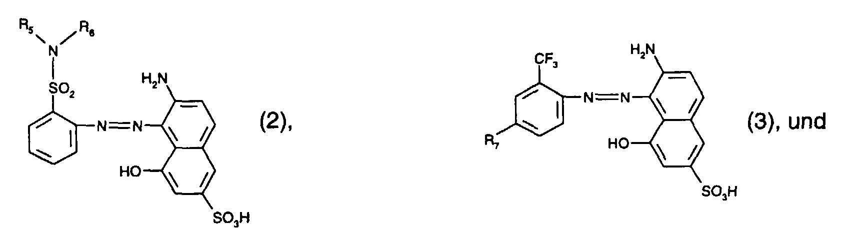 zusammen mit mindestens einem der blaufärbenden Farbstoffe der Formeln (4), (5) und (6) 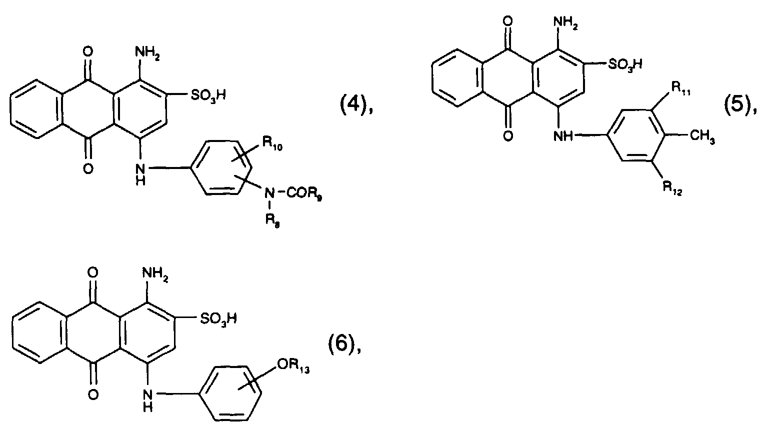 verwendet, wobei die Substituenten die in Anspruch 1 angegebenen Bedeutungen haben.

Das erfindungsgemässe Verfahren eignet sich zum Färben von natürlichen oder synthetischen Polyamidfasermaterialien aus wässriger Flotte oder zum Drucken mit Druckpasten.

## Beschreibung

Die vorliegende Erfindung betrifft ein Verfahren zum Trichromie-Färben oder -Bedrucken von natürlichen und synthetischen Polyamidfasermaterialien.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Trichromie-Prinzip geeigneten Farbstoffen zu finden.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus.

Gegenstand der vorliegenden Erfindung ist ein Verfahren zum Trichromie-Färben oder -Bedrucken von natürlichem oder synthetischem Polyamidfasermaterial, welches dadurch gekennzeichnet ist, dass man
mindestens einen gelb- oder orangefärbenden Farbstoff der Formel (1) 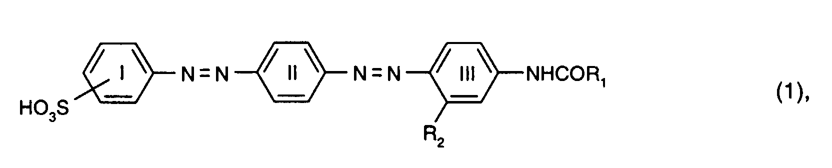 worin
R₁ unsubstituiertes oder durch Hydroxy, C₁-C₄-Alkoxy oder Halogen substituiertes C₁-C₄-Alkyl oder C₁-C₄-Alkoxy, unsubstituiertes oder durch C₁-C₄-Alkyl, C₁-C₄-Alkoxy oder Halogen substituiertes Phenyl oder Phenoxy oder ein Rest der Formel -N(R₃)R₄ sind, wobei R₃ und R₄ unabhängig voneinander Wasserstoff, C₁-C₄-Alkyl oder unsubstituiertes oder im Alkylteil durch Hydroxy oder C₁-C₄-Alkoxy weitersubstituiertes C₂-C₄-Alkanoyl ist,
R₂C₁-C₄-Alkyl ist und
die Benzolringe I, II und III der Farbstoffe der Formel (1) gegebenenfalls durch C₁-C₄-Alkyl, C₁-C₄-Alkoxy, C₂-C₄-Alkanoylamino, Ureido oder Halogen ein- oder mehrfach weitersubstituiert sind,
   zusammen mit mindestens einem rotfärbenden Farbstoff der Formeln (2) und (3) 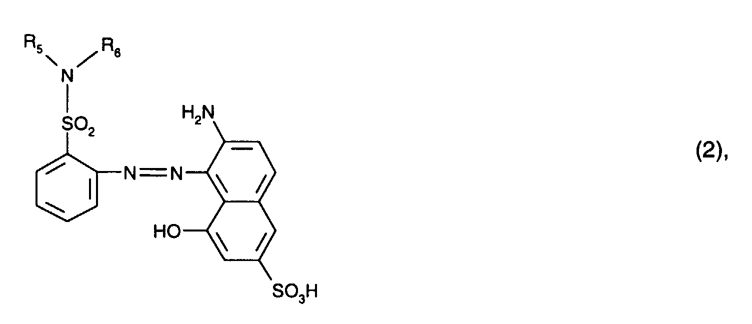 worin
R₅ C₁-C₆-Alkyl, Phenyl oder Cyclohexyl und R₆ C₁-C₆-Alkyl ist, oder
   die Reste R₅ und R₆ zusammen mit dem sie verbindenden Stickstoffatom einen Azepinylring bilden, 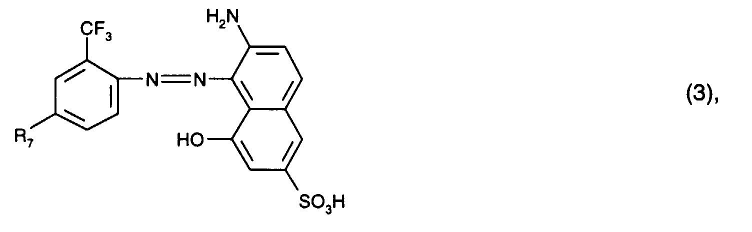 worin
R₇ Wasserstoff, Halogen oder C₂-C₄-Alkanoylamino bedeutet, und
   zusammen mit mindestens einem der blaufärbenden Farbstoffe der Formeln (4), (5) und (6) 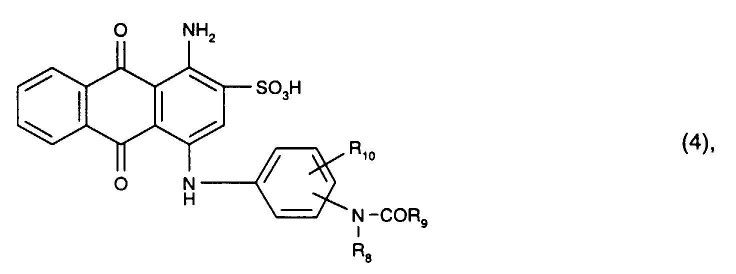 worin
R₈ Wasserstoff oder C₁-C₄-Alkyl ist,
R₉ unsubstituiertes oder durch Hydroxy, C₁-C₄-Alkoxy oder Halogen substituiertes C₁-C₄-Alkyl oder C₁-C₄-Alkoxy, oder Amino ist, und
R₁₀ Wasserstoff, C₁-C₄-Alkyl oder C₁-C₄-Alkoxy ist, 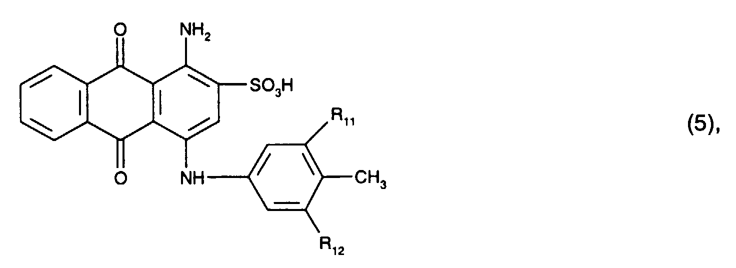 worin
R₁₁ Wasserstoff oder Methyl ist und
R₁₂ ein C₁-C₄-Hydroxyalkylsulphamoylrest ist, 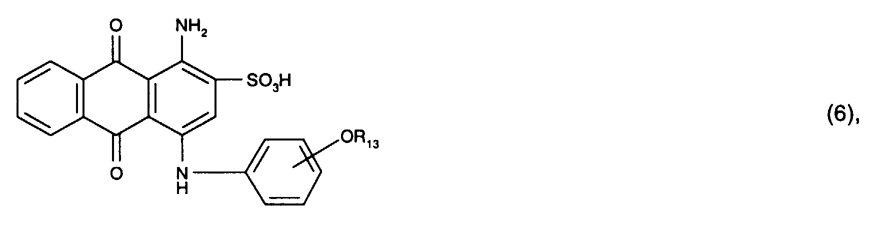 worin
R₁₃ C₁-C₄-Alkyl ist,
   verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Als C₁-C₄-Alkyl kommen für R₁, R₂, R₃, R₄, R₈, R₉, R₁₀, R₁₃ sowie als Substituent der Benzolringe I, II und III der Farbstoffe der Formel (1) unabhängig voneinander Methyl, Äthyl, Propyl, Isopropyl, Butyl, sek.-Butyl, tert.-Butyl oder Isobutyl, insbesondere Methyl oder Aethyl, in Betracht. Der Rest R₁ in der Bedeutung als C₁-C₄-Alkyl kann durch Hydroxy, Halogen wie z.B. Brom oder vorzugsweise Chlor, oder insbesondere durch C₁-C₄-Alkoxy, wie z.B. Aethoxy oder vorzugsweise Methoxy, weitersubstituiert sein. Als Beispiel für entsprechende substituierte Reste sei der Methoxymethylrest genannt.

Als C₁-C₆-Alkyl kommen für R₅ und R₆ z.B. Methyl, Aethyl, Propyl, Isopropyl, Butyl, Isobutyl, sek.-Butyl, tert.-Butyl oder geradkettiges oder verzweigtes Pentyl oder Hexyl in Betracht. Bevorzugt sind Methyl und Aethyl, insbesondere Methyl.

Als C₁-C₄-Alkoxy kommen für R₁, R₉ und R₁₀ sowie als Substituent der Benzolringe I, II und III der Farbstoffe der Formel (1) unabhängig voneinander z.B. Methoxy, Äthoxy, Propoxy, Isopropoxy, Butoxy oder Isobutoxy, insbesondere Methoxy oder vorzugsweise Aethoxy, in Betracht. Der Rest R₁ in der Bedeutung als C₁-C₄-Alkoxy kann durch Hydroxy, Halogen wie z.B. Brom oder vorzugsweise Chlor, oder insbesondere durch C₁-C₄-Alkoxy, wie z.B. Methoxy oder Aethoxy, weitersubstituiert sein. Bevorzugt sind die entsprechenden unsubstituierten Reste.

Als C₂-C₄-Alkanoyl kommen für R₃ und R₄ unabhängig voneinander z.B. Propionyl oder insbesondere Acetyl in Betracht. Die Reste R₃ und R₄ können in der Bedeutung als C₂-C₄-Alkanoyl durch Hydroxy oder insbesondere C₁-C₄-Alkoxy, wie z.B. Methoxy oder Aethoxy, weitersubstituiert sein.

Als Phenyl oder Phenoxy kommen für R₁ neben den entsprechenden unsubstituierten Resten die durch C₁-C₄-Alkyl, wie Methyl, Äthyl, Propyl, Isopropyl, Butyl, sek.-Butyl, tert.-Butyl oder Isobutyl, C₁-C₄-Alkoxy, wie z.B. Methoxy, Äthoxy, Propoxy, Isopropoxy, Butoxy oder Isobutoxy, oder durch Halogen, wie z.B. Fluor, Brom oder insbesondere Chlor, substituierten Reste in Betracht. Bevorzugt sind hierbei die entsprechenden Phenylreste.

Als Halogen kommt für R₇ sowie als Substituent der Benzolringe I, II und III der Farbstoffe der Formel (1) beispielsweise Brom oder insbesondere Chlor in Betracht.

Als C₂-C₄-Alkanoylamino kommt für R₇ sowie als Substituent der Benzolringe I, II und III der Farbstoffe der Formel (1) insbesondere Acetylamino in Betracht.

Bilden die Reste R₅ und R₆ zusammen mit dem sie verbindenden Stickstoffatom einen Azepinylring 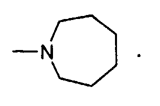 so handelt es sich um den Rest der Formel

Als C₁-C₄-Hydroxyalkylsulphamoylrest kommt für R₁₂ insbesondere ein Rest der Formel -SO₂-NH-CH₂-CH₂-OH in Betracht.

Als mögliche weitere Substituenten der Benzolringe I, II und III der Farbstoffe der Formel (1) kommen bevorzugt C₁-C₄-Alkyl, C₁-C₄-Alkoxy, Ureido oder Halogen, insbesondere C₁-C₄-Alkyl, C₁-C₄-Alkoxy oder Ureido und vorzugsweise C₁-C₄-Alkyl oder C₁-C₄-Alkoxy in Betracht. Besonders bevorzugt enthalten die Benzolringe I und II der Farbstoffe der Formel (1) keine Substituenten und der Benzolring III einen oder zwei C₁-C₄-Alkylsubstituenten.

Von besonderem Interesse als Farbstoffe der Formel (1) sind solche der Formel 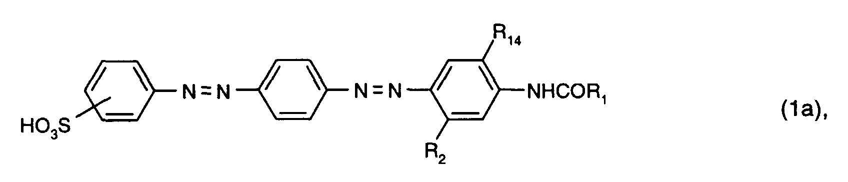 worin
R₁ und R₂ die oben angegebenen Bedeutungen haben und R₁₄ ein C₁-C₄-Alkyl ist.
R₃ ist bevorzugt Wasserstoff oder C₁-C₄-Alkyl, insbesondere Wasserstoff.
R₄ ist bevorzugt Wasserstoff, C₁-C₄-Alkyl oder unsubstituiertes oder im Alkylteil durch C₁-C₄-Alkoxy weitersubstituiertes C₂-C₄-Alkanoyl, insbesondere Wasserstoff oder im Alkylteil gegebenenfalls durch C₁-C₄-Alkoxy weitersubstituiertes C₂-C₄-Alkanoyl. Besonders bevorzugt ist R₄ Wasserstoff.

Ganz besonders bevorzugt sind R₃ und R₄ Wasserstoff.

R₁ ist vorzugsweise unsubstituiertes oder durch Hydroxy, C₁-C₄-Alkoxy oder Halogen substituiertes C₁-C₄-Alkyl oder C₁-C₄-Alkoxy, oder ein Rest der Formel -N(R₃)R₄, wobei für R₃ und R₄ die oben angegebenen Bedeutungen und Bevorzugungen gelten. Vorzugsweise sind hierbei R₃ Wasserstoff und R₄ Wasserstoff oder im Alkylteil durch C₁-C₄-Alkoxy weitersubstituiertes C₂-C₄-Alkanoyl, insbesondere Wasserstoff.

Bevorzugt ist R₁ C₁-C₄-Alkoxy, unsubstituiertes oder durch C₁-C₄-Alkoxy substituiertes C₁-C₄-Alkyl, oder ein Rest der Formel -N(R₃)R₄, wobei für R₃ und R₄ die oben angegebenen Bedeutungen und Bevorzugungen gelten. Vorzugsweise sind hierbei R₃ Wasserstoff und R₄ Wasserstoff oder im Alkylteil durch C₁-C₄-Alkoxy weitersubstituiertes C₂-C₄-Alkanoyl, insbesondere Wasserstoff.

Ganz besonders bevorzugt ist R₁ Methyl, Aethyl, Methoxy oder Aethoxy, insbesondere Methoxy oder Aethoxy.

R₂ ist bevorzugt Aethyl oder besonders bevorzugt Methyl.

Von besonderem Interesse sind Farbstoffe der Formel (1), worin R₁ C₁-C₄-Alkyl oder C₁-C₄-Alkoxy, insbesondere C₁-C₄-Alkoxy, ist, und R₂ Aethyl, insbesondere Methyl, ist, und vorzugsweise solche der Formel (1a), worin R₁ C₁-C₄-Alkyl oder C₁-C₄-Alkoxy, insbesondere C₁-C₄-Alkoxy, ist, R₂ Aethyl, insbesondere Methyl ist und R₁₄ Aethyl, insbesondere Methyl ist.

Von ganz besonderem Interesse sind Farbstoffe der Formel (1), worin R₁ Methyl, Aethyl, Methoxy oder Aethoxy, insbesondere Methoxy oder Aethoxy, ist, und R₂ Aethyl, insbesondere Methyl, ist, und vorzugsweise solche der Formel (1a), worin R₁ Methyl, Aethyl, Methoxy oder Aethoxy, insbesondere Methoxy oder Aethoxy, ist, R₂ Aethyl, insbesondere Methyl und R₁₄ Methyl ist.

Unter den Farbstoffen der Formel (1a) ist der Farbstoff der Formel 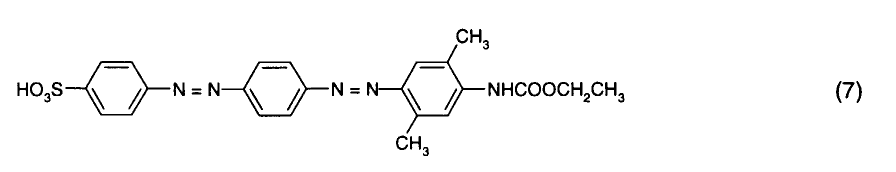 ganz besonders bevorzugt.

Die Sulfogruppe in den Farbstoffen der Formel (1) und insbesondere in den Farbstoffen der Formel (1a) ist vorzugsweise in para-Stellung, relativ zur Azogruppe, gebunden.

Der Rest R₅ ist bevorzugt Phenyl oder Cyclohexyl, insbesondere Cyclohexyl.

Der Rest R₆ ist bevorzugt Methyl oder Aethyl, insbesondere Methyl.

Weiterhin können die Reste R₅ und R₆ zusammen mit dem sie verbindenden Stickstoffatom einen Azepinylring bilden.

Der Rest R₇ ist bevorzugt Wasserstoff, Chlor oder insbesondere Acetylamino.

Der Rest R₈ ist bevorzugt Wasserstoff.

Der Rest R₉ ist bevorzugt Methyl, Aethyl oder Amino, insbesondere Methyl oder Aethyl und vorzugsweise Aethyl.

Der Rest R₁₀ ist bevorzugt Wasserstoff oder Methyl, insbesondere Wasserstoff.

Der Rest R₁₁ ist bevorzugt Methyl.

Als rotfärbende Farbstoffe der Formel (2) verwendet man bevorzugt solche, worin R₅ Phenyl oder Cyclohexyl und R₆ Methyl oder Aethyl ist, oder die Reste R₅ und R₆ zusammen mit dem sie verbindenden Stickstoffatom einen Azepinylring bilden.

Besonders bevorzugt verwendet man als rotfärbende Farbstoffe der Formel (2) solche, worin R₅ Cyclohexyl und R₆ Methyl ist, oder die Reste R₅ und R₆ zusammen mit dem sie verbindenden Stickstoffatom einen Azepinylring bilden, insbesondere solche, worin R₅ Cyclohexyl und R₆ Methyl ist.

Als rotfärbende Farbstoffe verwendet man bevorzugt solche der Formel (2), für welche die oben angegebenen Bedeutungen und Bevorzugungen gelten.

Als blaufärbende Farbstoffe der Formel (4) verwendet man bevorzugt solche, worin der Rest der Formel -N(R₈)-CO-R₉ in meta- oder para-Stellung, insbesondere in meta-Stellung, relativ zur Aminogruppe, gebunden ist. Hierbei ist vorzugsweise R₈ Wasserstoff und R₉ Methyl, Aethyl oder Amino, insbesondere Methyl oder Aethyl und vorzugsweise Aethyl. Der Rest R₁₀ ist hierbei bevorzugt Wasserstoff oder Methyl, insbesondere Wasserstoff. Als blaufärbende Farbstoffe der Formel (5) verwendet man bevorzugt solche, worin R₁₂ ein Rest der Formel -SO₂-NH-CH₂-CH₂-OH ist. R₁₁ ist hierbei vorzugsweise Wasserstoff.

Als blaufärbende Farbstoffe sind für das erfindungsgemässe Verfahren der Farbstoff der Formel (4) oder eine Mischung des Farbstoffs der Formel (4) mit einem Farbstoff der Formel (5) bevorzugt. Von besonderem Interesse sind Mischungen des Farbstoffs der Formel (4) mit einem Farbstoff der Formel (5). Hierbei sind insbesondere solche Farbstoffe der Formeln (4) und (5) bevorzugt, worin R₈ Wasserstoff, R₉ Methyl, Äthyl oder Amino, R₁₀ Wasserstoff oder Methyl und R₁₂ ein Rest der Formel -SO₂-NH-CH₂-CH₂-OH ist.

Eine besonders bevorzugte Ausführungsform des erfindungsgemässen Verfahren ist dadurch gekennzeichnet, dass man
als rotfärbenden Farbstoff einen Farbstoff der Formel (2) verwendet, worin R₅ Cyclohexyl und R₆ Methyl ist,
als blaufärbende Farbstoffe eine Mischung des Farbstoffs der Formel (4) mit einem Farbstoff der Formel (5) verwendet, wobei R₈ Wasserstoff, R₉ Methyl, Äthyl oder Amino, R₁₀ Wasserstoff oder Methyl und R₁₂ ein Rest der Formel -SO₂-NH-CH₂-CH₂-OH ist, und
als gelb- oder orangefärbenden Farbstoff einen Farbstoff der Formel (1a), worin R₁ C₁-C₄-Alkyl oder vorzugsweise C₁-C₄-Alkoxy, R₂ C₁-C₄-Alkyl oder Amino ist, und R₁₄ Methyl ist, verwendet.

Einen weiteren Gegenstand der vorliegenden Erfindung stellen Farbstoffmischungen dar, welche mindestens einen gelb- oder orangefärbenden Farbstoff der Formel (1) zusammen mit mindestens einem rotfärbenden Farbstoff der Formeln (2) und (3) und zusammen mit mindestens einem blaufärbenden Farbstoff der Formeln (4), (5) und (6) enthalten. Hierbei gelten für die Farbstoffe der Formeln (1), (2), (3), (4), (5) und (6) sowie für deren Mischungen die oben angegebenen Bedeutungen und Bevorzugungen.

Die in dem erfindungsgemässen Verfahren zum Trichromie-Färben oder -Bedrucken verwendeten Farbstoffe der Formeln (1), (2), (3), (4), (5), (6) und (7) sind bekannt oder können in Analogie zu bekannten Farbstoffen hergestellt werden.

So können Farbstoffe der Formel (1) z.B. erhalten werden, indem man ein Amin der Formel 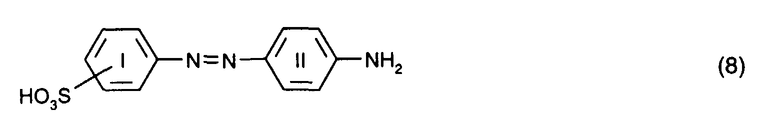 diazotiert, auf eine Kupplungskomponente der Formel 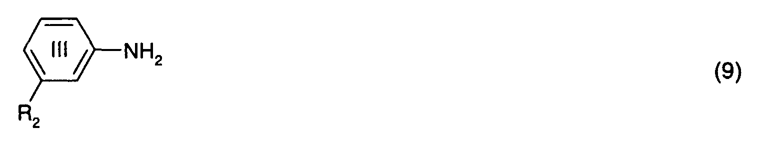 kuppelt und das erhaltene Reaktionsprodukt mit einer den Rest der Formel 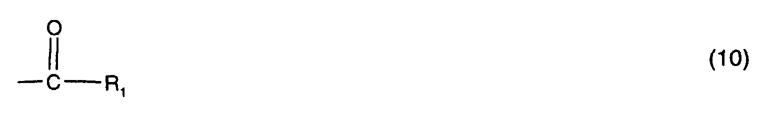 einführenden Verbindung umsetzt, wobei R₁ und R₂ die oben unter Formel (1) angegebenen Bedeutungen haben.

Die Diazotierung der Verbindung der Formel (8) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei 0 bis 10°C.

Die Kupplung auf die Kupplungskomponente der Formel (9) erfolgt in an sich bekannter Weise, bei sauren, neutralen bis schwach alkalischen pH-Werten, z.B. einem pH-Wert von 3 bis 7, und Temperaturen von beispielsweise -5 bis 30°C, vorzugsweise 0 bis 25°C. Zur Einführung des Restes der Formel (10) können beispielsweise Verbindungen der Formel 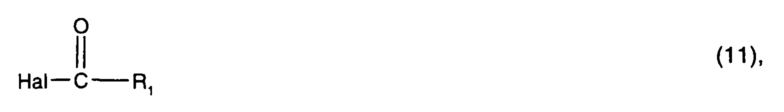 worin Hal Halogen, wie Chlor, Brom oder Jod, insbesondere Chlor, bedeutet, verwendet werden. Als Beispiele für Verbindungen der Formel (10) seien Acetylchlorid, Propionylchlorid, Methoxyacetylchlorid sowie Chlorameisensäure-äthylester genannt. Als weitere Beispiele für den Rest der Formel (10) einführende Verbindungen seien Essigsäureanhydrid und Propionsäureanhydrid genannt.

Die Einführung des Restes der oben genannten Formel (10) kann z.B. in dipolaren aprotischen Lösungsmitteln, wie z.B. Dimethylformamid oder Dimethylsulfoxid, oder in Wasser oder vorzugsweise in Pyridin erfolgen, bei einer Temperatur von beispielsweise 10 bis 80°C, insbesondere 10 bis 50°C.
Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe können weitere Zusätze, wie z.B. Kochsalz oder Dextrin, enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,01 bis 10 Gew.-%, bezogen auf das Färbegut bzw. die Druckpaste, als vorteilhaft erwiesen. Vorzugsweise färbt man bei einem pH-Wert von 3 bis 7, insbesondere 4 bis 7. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten und Löslichkeit sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen. Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

111 Gewichtsteile 4-Amino-azobenzol-4'-sulfosäure werden bei 80°C in 500 Gewichtsteilen Wasser gelöst. Nach dem Abkühlen der Lösung auf 40°C wird diese mit 200 Gewichtsteilen Eis und 118,5 Gewichtsteilen konzentrierter Salzsäure versetzt. Zu der entstehenden orangen Suspension werden innert 30 Minuten bei 38-40°C 100 Gewichtsteile 4N-Natriumnitritlösung 4N zugetropft und 90 Minuten bei 40°C ausreagieren gelassen.
Danach wird die Diazosuspension innert 30 Minuten bei 20-25°C und einem pH-Wert von 3,5 zu einer Suspension, bestehen aus 48,5 Gewichtsteilen 2,5-Dimethylanilin in 330 Gewichtsteilen Wasser, zugetropft, wobei der pH-Wert mit 10%-iger wässrigen Natriumhydroxidlösung bei 3,5 gehalten wird. Nach beendeter Zugabe wird der pH-Wert stufenweise auf 6 erhöht.
Nach beendeter Kupplung wird das Reaktionsgemisch bei 60°C abfiltriert, der Rückstand zweimal in 400 Gewichtsteilen Wasser von 60°C angeschlämmt, abfiltriert und getrocknet. Man erhält 143 Gewichtteile der Verbindung der Formel 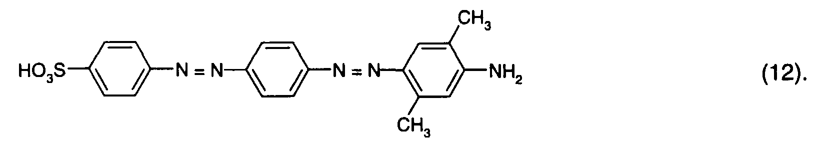 4,1 Gewichtsteile der Verbindung der Formel (50) werden in 60 Gewichtsteilen Pyridin verrührt und zu dieser Mischung werden innert 5 Minuten 4,6, Gewichtsteile Propionylchlorid zugetropft wobei die Temperatur bis auf 35°C ansteigt. Nach einer Reaktionsdauer von 60 Minuten, wobei die Temperatur der Reaktionsmischung allmählich bis auf die Raumtemperatur sinkt, werden 10 Gewichtsteile Methylalkohol zugegeben.
Die entstandene orange Suspension wird auf 100 Gewichtsteile 25%-iger Sole ausgetragen und danach abfiltriert. Der Fitrerrückstand wird mit 5%-iger Sole und Methanol gewaschen und getrocknet.
Man erhält 3,8 Gewichtsteile der Verbindung der Formel 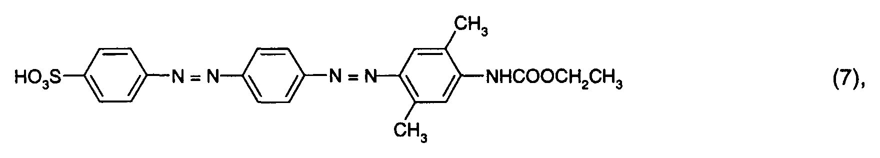 mit einer Extinction λₘₐₓ 394 nm.

### Beispiele 2 bis 4:

Verfährt man wie in Beispiel 1 angegeben, verwendet jedoch anstelle 4,6 Gewichtsteilen Propionylchlorid die equimolare Menge eines der in der folgenden Tabelle 1 in Spalte 2 angegebenen Säurechloride, so erhält man Verbindungen der Formel

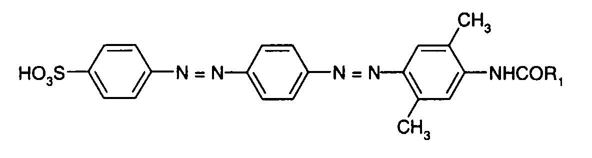

**Tabelle 1**

| Beispiel | Säurechlorid | R₁ | Nuance |
|---|---|---|---|
| 2 | CH₃COCl | CH₃ | orange |
| 3 | CH₃OCOCl | OCH3 | orange |
| 4 | CH₃CH₂OCOCl | OCH₂CH₃ | orange |

### Beispiel 5:

Zu 2000 Gewichtsteilen entmineralisiertem Wasser wird bei Raumtemperatur 1 Gewichtsteil eines Egalisierhilfsmittels (basierend auf dem Kondensationsprodukt aus einem höheren aliphatischen Amin und Ethylenoxid) zugegeben. Anschliessend wird das Bad mit 4 Gewichtsteilen Natriumdihydrogenphosphat und 0,6 Gewichtsteilen Dinatriumhydrogenphosphat auf einen pH-Wert von 6 gestellt. Dann gibt man
0,16 Gewichtsteilen eines Farbstoffs, der in Form der freien Säure der Verbindung der Formel 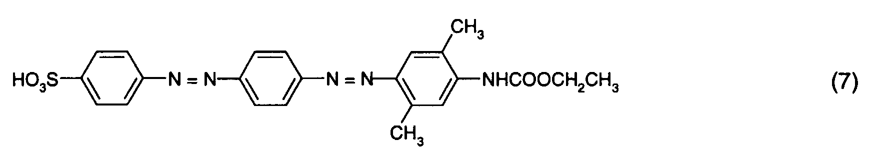 entspricht,
0,09 Teilen eines Farbstoffs, der in Form der freien Säure der Verbindung der Formel 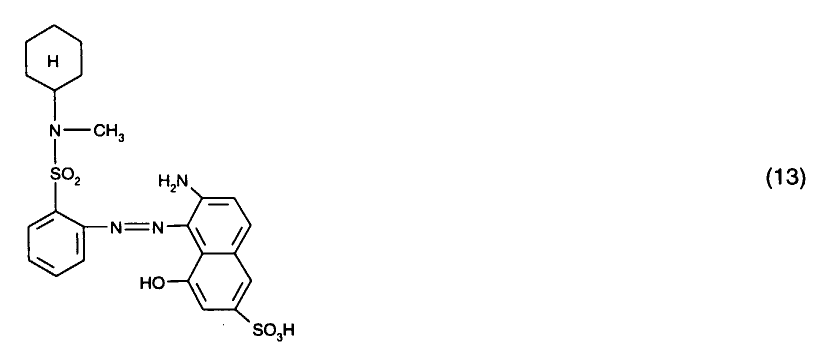 entspricht,
0,033 Teilen eines Farbstoffs, der in Form der freien Säure der Verbindung der Formel 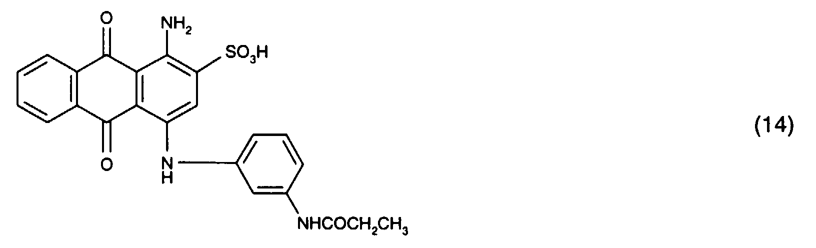 entspricht, und
0,098 Teilen eines Farbstoffs, der in Form der freien Säure der Verbindung der Formel 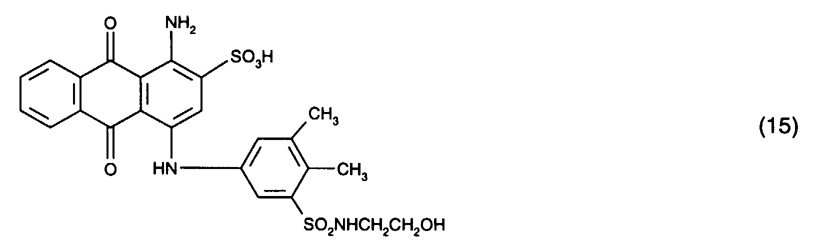 entspricht, zu.
In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

## Patentansprüche

1. Verfahren zum Trichromie-Färben oder -Bedrucken von natürlichem oder synthetischem Polyamidfasermaterial, dadurch gekennzeichnet, dass man
mindestens einen gelb- oder orangefärbenden Farbstoff der Formel (1) 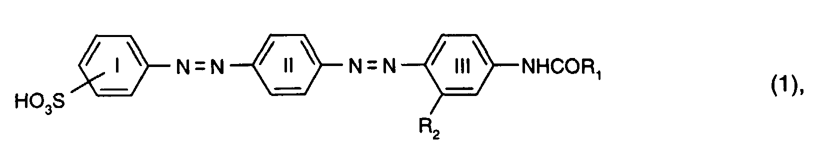 worin
R₁ unsubstituiertes oder durch Hydroxy, C₁-C₄-Alkoxy oder Halogen substituiertes C₁-C₄-Alkyl oder C₁-C₄-Alkoxy, unsubstituiertes oder durch C₁-C₄-Alkyl, C₁-C₄-Alkoxy oder Halogen substituiertes Phenyl oder Phenoxy, oder ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl ist, R₂ C₁-C₄-Alkyl ist und
die Benzolringe I, II und III der Farbstoffe der Formel (1) gegebenenfalls durch C₁-C₄-Alkyl, C₁-C₄-Alkoxy, C₂-C₄-Alkanoylamino, Ureido oder Halogen ein- oder mehrfach weitersubstituiert sind,
zusammen mit mindestens einem rotfärbenden Farbstoff der Formeln (2) und (3) 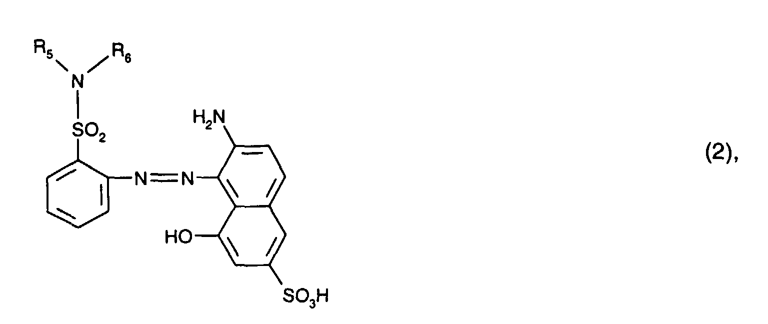
worin R₅ C₁-C₆-Alkyl, Phenyl oder Cyclohexyl und R₆ C₁-C₆-Alkyl ist, oder die Reste R₅ und R₆ zusammen mit dem sie verbindenden Stickstoffatom einen Azepinylring bilden, 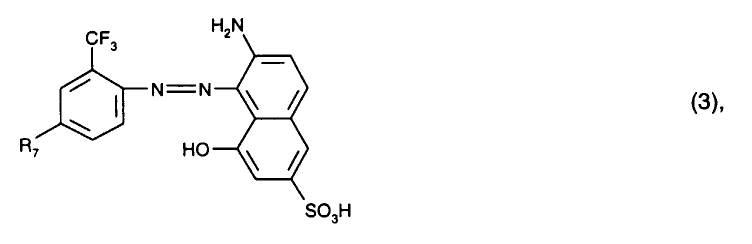
worin R₇ Wasserstoff, Halogen oder C₂-C₄-Alkanoylamino bedeutet, und
zusammen mit mindestens einem der blaufärbenden Farbstoffe der Formeln (4), (5) und (6) 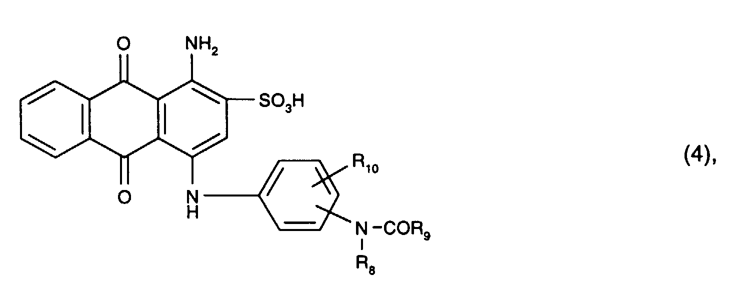
worin R₈ Wasserstoff oder C₁-C₄-Alkyl ist, R₉ unsubstituiertes oder durch Hydroxy, C₁-C₄-Alkoxy oder Halogen substituiertes C₁-C₄-Alkyl oder C₁-C₄-Alkoxy, oder Amino ist, und R₁₀ Wasserstoff, C₁-C₄-Alkyl oder C₁-C₄-Alkoxy ist, 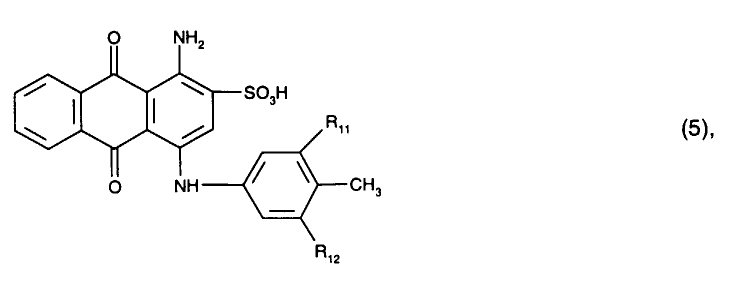
worin R₁₁ Wasserstoff oder Methyl ist und R₁₂ ein C₂₋₄-Hydroxyalkylsulphamoylrest ist, 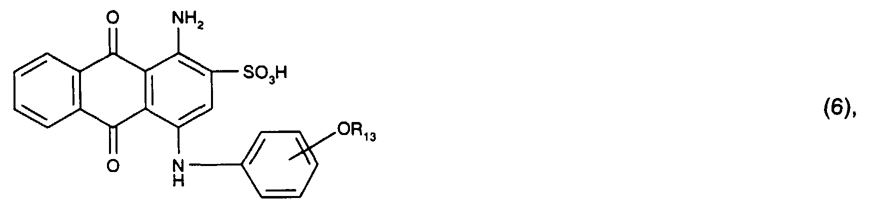
worin R₁₃ C₁-C₄-Alkyl ist,
verwendet.

2. Verfahren gemäss Anspruch 1, dadurch gekennzeichnet, dass man
als Farbstoff der Formel (1) einen Farbstoff der Formel 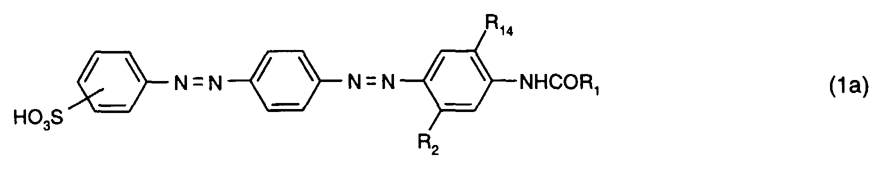 verwendet, worin R₁ und R₂ die in Anspruch 1 angegebenen Bedeutungen haben und R₁₄ C₁-C₄-Alkyl ist.

3. Verfahren gemäss einem der Ansprüche 1 und 2, dadurch gekennzeichnet, dass R₁ unsubstituiertes oder durch Hydroxy, C₁-C₄-Alkoxy oder Halogen substituiertes C₁-C₄-Alkyl oder C₁-C₄-Alkoxy, oder ein Rest der Formel -N(R₃)R₄ ist, wobei R₃ Wasserstoff und R₄ Wasserstoff oder im Alkylteil gegebenenfalls durch C₁-C₄-Alkoxy weitersubstituiertes C₂-C₄-Alkanoyl ist.

4. Verfahren gemäss einem der Ansprüche 1 bis 3, dadurch gekennzeichnet, dass R₁ C₁-C₄-Alkoxy, unsubstituiertes oder durch C₁-C₄-Alkoxy substituiertes C₁-C₄-Alkyl, oder Amino ist.

5. Verfahren gemäss einem der Ansprüche 1 bis 4, dadurch gekennzeichnet, dass R₁ C₁-C₄-Alkoxy ist.

6. Verfahren gemäss einem der Ansprüche 1 bis 5, dadurch gekennzeichnet, dass man als rotfärbenden Farbstoff einen Farbstoff der Formel (2) verwendet, worin R₅ Cyclohexyl und R₆ Methyl ist, oder die Reste R₅ und R₆ zusammen mit dem sie verbindenden Stickstoffatom einen Azepinylring bilden.

7. Verfahren gemäss einem der Ansprüche 1 bis 6, dadurch gekennzeichnet, dass man als blaufärbenden Farbstoff einen Farbstoff der Formel (4) oder eine Mischung des Farbstoffs der Formel (4) mit einem Farbstoff der Formel (5) verwendet, wobei R₈ Wasserstoff, R₉ Methyl, Äthyl oder Amino, R₁₀ Wasserstoff oder Methyl und R₁₂ ein Rest der Formel -SO₂-NH-CH₂-CH₂-OH ist.

8. Verfahren gemäss Anspruch 7, dadurch gekennzeichnet, dass man
als blaufärbenden Farbstoff eine Mischung des Farbstoffs der Formel (4) mit einem Farbstoff der Formel (5) verwendet, wobei R₈ Wasserstoff, R₉ Methyl, Äthyl oder Amino, R₁₀ Wasserstoff oder Methyl und R₁₂ ein Rest der Formel -SO₂-NH-CH₂-CH₂-OH ist.

9. Verfahren gemäss einem der Ansprüche 1 bis 8, dadurch gekennzeichnet, dass man als rotfärbenden Farbstoff einen Farbstoff der Formel (2) verwendet, worin R₅ Cyclohexyl und R₆ Methyl ist.

10. Verfahren gemäss einem der Ansprüche 1 bis 9, dadurch gekennzeichnet, dass man Wolle oder synthetisches Polyamidfasermaterial färbt oder bedruckt.

11. Verfahren gemäss Anspruch 10, dadurch gekennzeichnet, dass man synthetisches Polyamidfasermaterial färbt oder bedruckt.

12. Farbstoffmischungen, dadurch gekennzeichnet, dass sie
mindestens einen mindestens einen gelb- oder orangefärbenden Farbstoff der Formel (1) 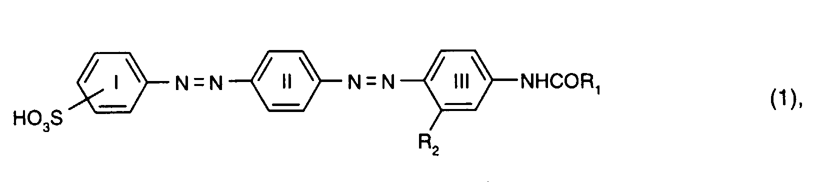 worin
R₁ unsubstituiertes oder durch Hydroxy, C₁-C₄-Alkoxy oder Halogen substituiertes C₁-C₄-Alkyl oder C₁-C₄-Alkoxy, unsubstituiertes oder durch C₁-C₄-Alkyl, C₁-C₄-Alkoxy oder Halogen substituiertes Phenyl oder Phenoxy, oder ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl ist, R₂ C₁-C₄-Alkyl ist und
die Benzolringe I, II und III der Farbstoffe der Formel (1) gegebenenfalls durch C₁-C₄-Alkyl, C₁-C₄-Alkoxy, C₂-C₄-Alkanoylamino, Ureido oder Halogen ein- oder mehrfach weitersubstituiert sind,
zusammen mit mindestens einem rotfärbenden Farbstoff der Formeln (2) und (3) 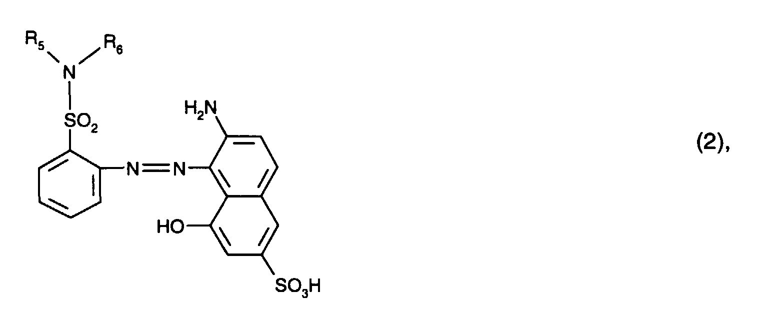
worin R₅ C₁-C₆-Alkyl, Phenyl oder Cyclohexyl und R₆ C₁-C₆-Alkyl ist, oder die Reste R₅ und R₆ zusammen mit dem sie verbindenden Stickstoffatom einen Azepinylring bilden, 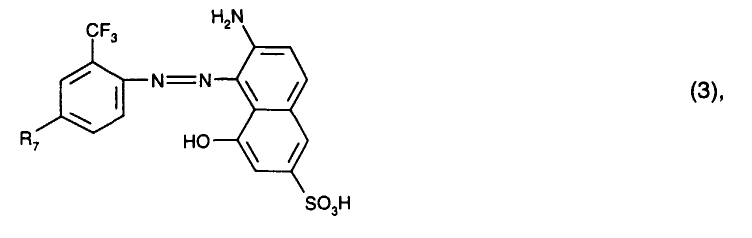
worin R₇ Wasserstoff, Halogen oder C₂-C₄-Alkanoylamino bedeutet, und zusammen mit mindestens einem der blaufärbenden Farbstoffe der Formeln (4), (5) und (6) 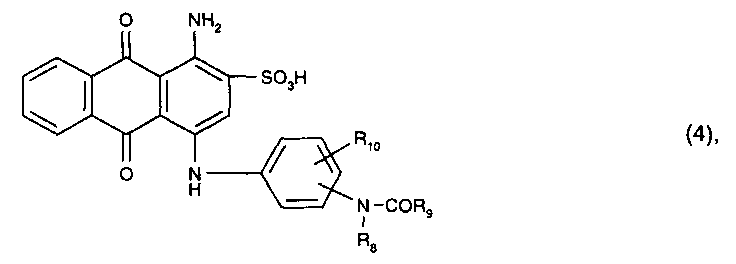
worin R₈ Wasserstoff oder C₁-C₄-Alkyl ist, R₉ unsubstituiertes oder durch Hydroxy, C₁-C₄-Alkoxy oder Halogen substituiertes C₁-C₄-Alkyl oder C₁-C₄-Alkoxy, oder Amino ist, und R₁₀ Wasserstoff, C₁-C₄-Alkyl oder C₁-C₄-Alkoxy ist, 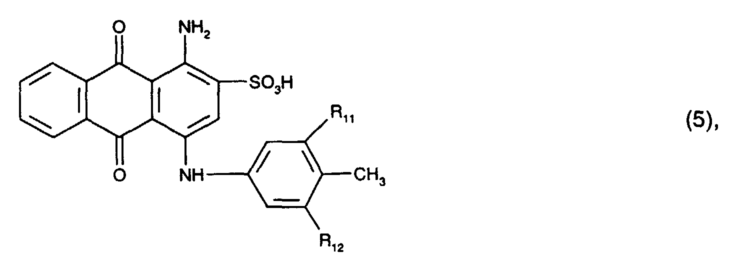
worin R₁₁ Wasserstoff oder Methyl ist und R₁₂ ein C₂₋₄-Hydroxyalkylsulphamoylrest ist, 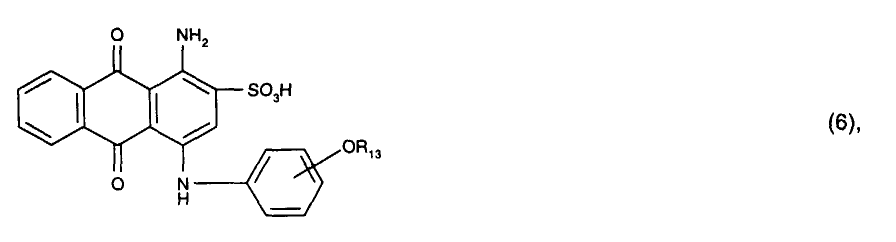
worin R₁₃ C₁-C₄-Alkyl ist,
enthalten.
